# EUROPEAN PATENT APPLICATION

(11) **EP 2 031 411 A2**
(43) Date of publication of application: **04.03.2009**
(21) Application number: 08015263.0
(22) Date of filing: 29.08.2008
(51) Int. Cl.: G01N 35/10

(54) **Dispensing apparatus, dispensing method, and automatic analyzer**

(30) Priority: 31.08.2007 JP 2007226971
(71) Applicant: Olympus Corporation, Tokyo 151-0072 (JP)
(72) Inventor: Nishimura, Isao, Tokyo 151-0072 (JP); Fukushima, Norichika, Tokyo 151-0072 (JP)
(74) Representative: von Hellfeld, Axel

(57) **Abstract**

A dispensing apparatus (10) includes a dispensing nozzle (11) that moves between a first position and a second position. The dispensing nozzle sucks in a liquid specimen including a reagent at the first position and dispenses the liquid specimen into a vessel (6) located at the second position. An agent applicator (18) is located on the path of movement of the dispensing nozzle. The agent applicator applies, to the discharge end portion of the dispensing nozzle, an agent having a low affinity for the liquid specimen than the inner surface of the dispensing nozzle.

## Description

### TECHNICAL FIELD

The present invention relates to a dispensing apparatus, a dispensing method, and an automatic analyzer.

### BACKGROUND ART

Conventional automatic analyzers that analyze a biological sample such as blood and other body fluids utilize a dispensing apparatus to dispense a liquid specimen including a reagent into a reaction vessel or receptacle. To dispense liquid specimens of a wide range of viscosities with high accuracy, a dispensing apparatus is known that measures air volume in the dispensing nozzle at the start of discharge of a liquid specimen. Based on the air volume, the dispensing apparatus calculates how far to push the plunger to dispense a desired amount of the liquid specimen (e.g., see Japanese Patent Application Laid-open Publication No. 2004-20320).

The dispensing apparatus disclosed in Japanese Patent Application Laid-open Publication No. 2004-20320, which needs means for measuring air volume in the dispensing nozzle, has a complicated structure and is difficult to dispense liquid specimens of a wide range of viscosities with high accuracy. In particular, this is hard to analyze a small amount of specimen or reagent caused by a need for low analysis cost because the viscosity difference is influenced a great deal by dispensing accuracy for a smaller amount of such a specimen liquid. For example, it is very difficult to accurately dispense a liquid specimen of 1 microliter.

In view of the foregoing matter, an object of the present invention is to provide a dispensing apparatus, a dispensing method, and an automatic analyzer which can highly accurately dispense small amount of specimens of a wide range of viscosities.

### DISCLOSURE OF INVENTION

A dispensing apparatus according to an aspect of the present invention includes a dispensing nozzle that moves between a first position and a second position, and sucks in a liquid specimen at the first position to dispense the liquid specimen into a vessel located at the second position. The liquid specimen contains a specimen or a reagent. The dispensing apparatus also includes an agent applicator that is located on the path of movement of the dispensing nozzle, and applies, to the discharge end portion of the dispensing nozzle, an agent having a low affinity for the liquid specimen than the inner surface of the dispensing nozzle.

A dispensing method according to another aspect of the present invention includes sucking in a liquid specimen containing a specimen or a reagent through a dispensing nozzle; discharging the liquid specimen; cleaning the dispensing nozzle; and applying, to the discharge end portion of the dispensing nozzle, an agent having a low affinity for the liquid specimen.

The above and other objects, features, advantages and technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is a schematic diagram of an automatic analyzer including a dispensing apparatus according to an embodiment of the present invention;
FIG. 2 is a schematic perspective view of the dispensing apparatus shown in FIG. 1;
FIG. 3 is a vertical cross-sectional view of a dispensing nozzle of the dispensing apparatus shown in FIG. 2;
FIG. 4 is an enlarged view of portion A of the dispensing nozzle shown in FIG. 3;
FIG. 5 is a perspective view of an agent-applied portion and the dispensing nozzle of the dispensing apparatus shown in FIG. 2;
FIG. 6 is a flowchart of the operation of the dispensing apparatus upon application of an agent to the discharge end portion of the dispensing nozzle;
FIG. 7 is a perspective view of a first modification of the agent-applied portion; and
FIG. 8 is a cross-sectional view of a second modification of the agent-applied portion.

### BEST MODE(S) FOR CARRYING OUT THE INVENTION

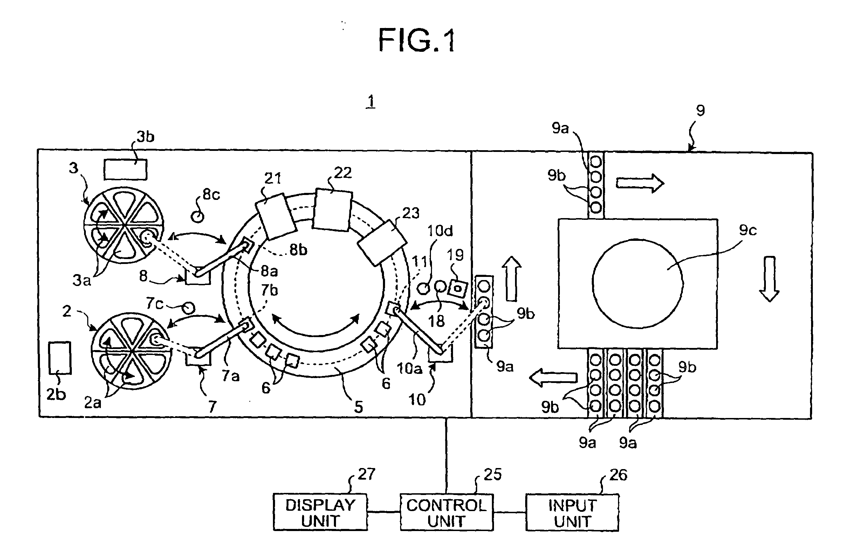

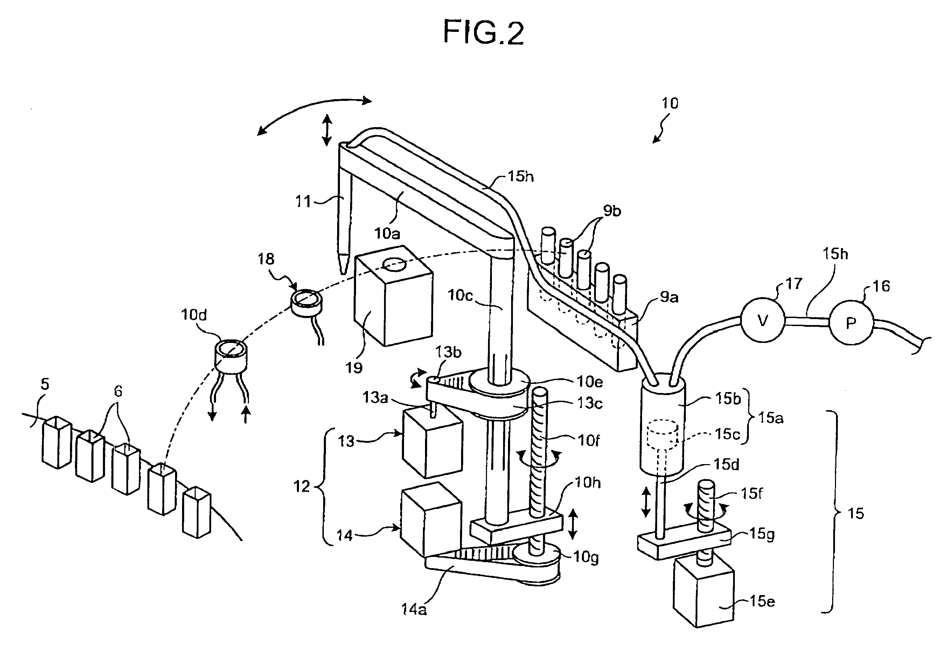

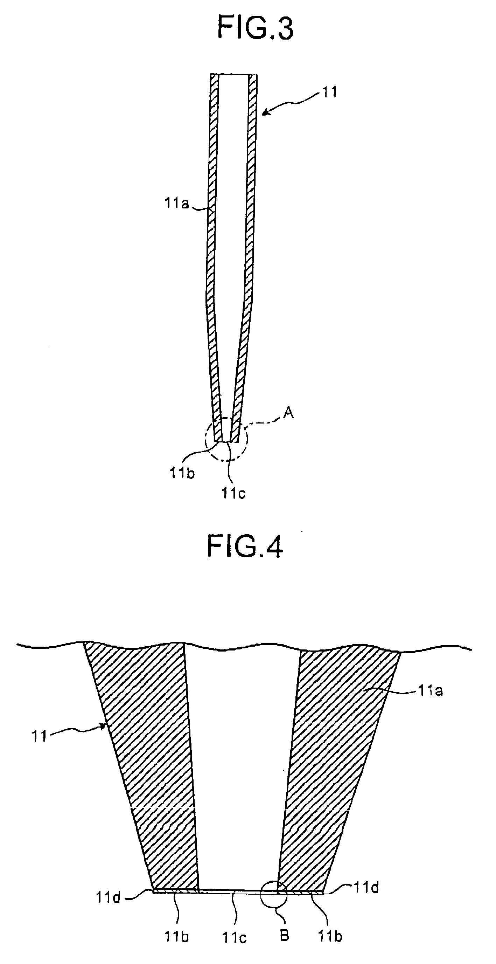

Exemplary embodiments of the present invention are explained in detail below with reference to the accompanying drawings. FIG. 1 is a schematic diagram of an automatic analyzer including a dispensing apparatus according to an embodiment of the present invention. FIG. 2 is a schematic perspective view of the dispensing apparatus shown in FIG. 1. FIG. 3 is a vertical cross-sectional view of a dispensing nozzle of the dispensing apparatus shown in FIG. 2. FIG. 4 is an enlarged view of portion A of the dispensing nozzle shown in FIG. 3. In these drawings, the relative positions of represented elements are illustrated schematically, and the sizes and dimensions of the elements are not to scale.

As shown in FIG. 1, an automatic analyzer 1 includes a first reagent table 2, a second reagent table 3, a reaction table 5, a first reagent dispensing apparatus 7, a second reagent dispensing apparatus 8, a specimen vessel conveyor 9, a specimen dispensing apparatus 10, a stirrer 21, a photometer 22, a cleaner 23, and a control unit 25.

The first reagent table 2 and the second reagent table 3 are of like construction and thus but one of them, the first reagent table 2, is described in detail below. Corresponding reference characters refer to constituent elements of the second reagent table 3 corresponding to those of the first reagent table 2.

To illustrate with reference to FIG. 1, the first reagent table 2 holds a plurality of reagent vessels 2a and is rotated by a drive mechanism, thereby transporting the reagent vessels 2a in the circumferential direction. Beside the outer circumference of the first reagent table 2 is arranged a first reading unit 2b. The first reading unit 2b reads data from a data storage medium, such as a barcode label, attached to the reagent vessels 2a.

The reaction table 5 is provided thereon with a plurality of reaction vessels 6 along the circumferential direction as shown in FIG. 1. The reaction table 5 is rotated in either one of two opposite directions by another drive mechanism than the ones used for the first reagent table 2 and the second reagent table 3. For example, but without limitation, the reaction table 5 may rotate clockwise one-fourth of "a revolution minus the angle occupied by one reaction vessel" for every cycle. In other words, assuming that the angle occupied by all the reaction vessels is N and that the angle occupied by one reaction vessel is M, the reaction table 5 may rotate by an angle of (1/4 of N)-(1/4 of M) degrees for one cycle, so that it rotates by an angle of (N - M) degrees for four cycles.

Each of the reaction vessels 6 is a rectangular cylindrical cuvette with a small capacity of a few nanoliters to several tens of microliters. The reaction vessels 6 are made of a transparent material that transmits not less than 80% of analytical light emitted by the photometer 22. Examples of such material include glass such as heat-resistant glass and synthetic resin such as cyclic olefin and polystyrene. Into the reaction vessels 6, the first reagent dispensing apparatus 7 and the second reagent dispensing apparatus 8 located near the reaction table 5 dispense reagents from the reagent vessels 2a and 3a on the first reagent table 2 and the second reagent table 3, respectively.

The first reagent dispensing apparatus 7 and the second reagent dispensing apparatus 8 are of like construction and thus but one of them, the first reagent dispensing apparatus 7, is described in detail below. Corresponding reference characters refer to constituent elements of the second reagent dispensing apparatus 8 corresponding to those of the first reagent dispensing apparatus 7.

The first reagent dispensing apparatus 7 rotates in directions indicated by a two-headed arrow shown in FIG. 1 in the horizontal plane. The first reagent dispensing apparatus 7 includes an arm 7a that moves up and down and a dispensing nozzle 7b through which reagent is dispensed. One end of the arm 7a is supported by the upper portion of a supporting column. The first reagent dispensing apparatus 7 further includes a washing tank 7c on the path of movement of the dispensing nozzle 7b for cleaning it with a cleaning fluid. In the washing tank 7c, the cleaning fluid is discharged from the dispensing nozzle 7b after flowing therethrough to clean its inner surface, while the cleaning fluid is sprayed against the dispensing nozzle 7b to clean the outer surface thereof. After the cleaning, the cleaning fluid is drained from the washing tank 7c.

The specimen vessel conveyor 9 conveys a plurality of racks 9a in directions indicated by arrows in FIG. 1 so that they move in a stepping manner. Each of the racks 9a holds a plurality of specimen vessels 9b each containing a specimen. Arranged in the center of the specimen vessel conveyor 9 is a cold box 9c that contains an urgent specimen. Each time the stepping movement of the racks 9a conveyed by the specimen vessel conveyor 9 stops, the specimen dispensing apparatus 10 dispenses the specimen into each of the reaction vessels 6.

As shown in FIG. 2, the specimen dispensing apparatus 10 rotates in the horizontal direction, and includes a driving arm 10a that moves up and down. The specimen dispensing apparatus 10 further includes a dispensing nozzle 11 supported by the driving arm 10a, a supporting column 10c that supports the driving arm 10a, and a washing tank 10d for cleaning the dispensing nozzle 11. Connected to the washing tank 10d are a couple of pipes, one for supplying a cleaning fluid into the washing tank 10d, the other for draining from the washing tank 10d the cleaning fluid that has been sprayed against the dispensing nozzle 11 to clean the outer surface thereof. As with the washing tank 7c of the first reagent dispensing apparatus 7, the washing tank 10d is arranged on the path of movement of the dispensing nozzle 11. The specimen dispensing apparatus 10 is provided with a nozzle driving mechanism 12 that implements the dispensing operation, a pump driving mechanism 15, an agent applicator 18, and a fixation promoting unit 19.

The dispensing nozzle 11 is formed by, for example, machining metal such as stainless steel or injection-molding synthetic resin such as polystyrene. The dispensing nozzle 11 includes, as shown in FIGS. 3 and 4, a cylindrical portion 11a and a discharge end portion 11b. The cylindrical portion 11a contains a liquid to be dispensed. The discharge end portion 11b is located at the end of the cylindrical portion 11a, and has an opening 11c for sucking and discharging a liquid. The cylindrical portion 11a of the dispensing nozzle 11 is tapered so that the discharge end portion 11b has a contact angle with a liquid greater than that inside the cylindrical portion 11a. More specifically, as shown in FIG. 3, the end of the dispensing nozzle 11, at least the discharge end portion 11b, is coated with a non-affinity film 11d made of, for example, fluoropolymer or silicone resin having a low affinity for a liquid to be dispensed than the inner surface of the cylindrical portion 11a. Thus, the boundary between the inner surface of the cylindrical portion 11a and the non-affinity film 11d (e.g., a portion denoted by B in FIG. 4) represents the boundary between different contact angles with a liquid. In this manner, by coating the discharge end portion 11b with the non-affinity film 11d, dropping of a liquid dispensed from the dispensing nozzle 11 can be effectively prevented.

The nozzle driving mechanism 12 moves the dispensing nozzle 11 up and down as well as rotating it. As shown in FIG. 2, the nozzle driving mechanism 12 includes a rotation motor 13 and an up-and-down motor 14. A timing belt 13c extends around a wheel 10e attached to the supporting column 10c and a wheel 13b attached to a rotation shaft 13a of the rotation motor 13. A timing belt 14a extends around a wheel attached to a rotation shaft of the up-and-down motor 14 and a wheel 10g attached to the lower portion of a threaded shaft 10f. The threaded shaft 10f is screwed on an up-and-down block 10h attached to the lower portion of the supporting column 10c, and forms a ball screw together with the up-and-down block 10h.

The pump driving mechanism 15 causes the dispensing nozzle 11 to dispense a specimen and, as shown in FIG. 2, includes a plunger pump 15a and a dispensing motor 15e. The plunger pump 15a includes a cylinder 15b and a plunger 15c. The plunger 15c is driven to reciprocate by the dispensing motor 15e. An up-and-down block 15g is attached to a threaded shaft 15f connected to the rotation shaft of the dispensing motor 15e. The lower portion of a rod 15d extending from the plunger 15c is connected to the up-and-down block 15g of the dispensing motor 15e. The plunger pump 15a is connected from the cylinder 15b to the dispensing nozzle 11 and to a washing tank through pipes 15h. The pipe 15h that connects between the cylinder 15b and the washing tank is provided with a pump 16 and a valve 17.

The pump 16 pumps a cleaning fluid contained in the washing tank into the cylinder 15b of the pump driving mechanism 15. The valve 17 switches the flow of the cleaning fluid through the pipe 15h that connects between the washing tank and the pump driving mechanism 15.

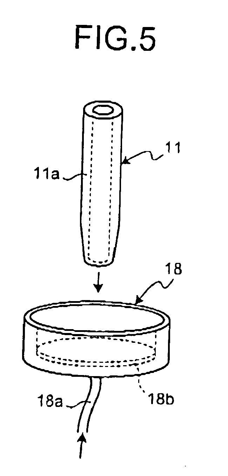

The agent applicator 18 is, as shown in FIG. 2, located on the path of movement of the dispensing nozzle 11 to apply an agent to the discharge end portion 11b of the dispensing nozzle 11. The agent is a solution, such as a fluoropolymer solution or a silicone resin solution, having a low affinity for a specimen to be dispensed than the inner surface of the dispensing nozzle 11. As shown in FIGS. 2 and 5, the agent applicator 18 can be a pad that is impregnated with the agent such as a fluoropolymer solution or a silicone resin solution supplied from a pipe 18a. The agent applicator 18 includes a pressure sensor 18b at the bottom to check the application of the agent. The pressure sensor 18b detects the pressure on the agent applicator 18 when the dispensing nozzle 11 moves down and the discharge end portion 11b is brought into contact with the agent applicator 18, thereby checking the application of the agent to the discharge end portion 11b. The pressure sensor 18b outputs a pressure signal to the control unit 25 based on the detected pressure.

The fixation promoting unit 19 is located on the path of movement of the dispensing nozzle 11, and blows air or hot air to the discharge end portion 11b of the dispensing nozzle 11 with a blower or a blower with heater. By drying the agent, such as a fluoropolymer solution or a silicone resin solution, applied to the discharge end portion 11b of the dispensing nozzle 11, the fixation promoting unit 19 promotes fixation of the agent.

As shown in FIG. 1, the stirrer 21 is located on the circumference of the reaction table 5 near the second reagent dispensing apparatus 8. The stirrer 21 stirs the liquid specimen that contains a reagent and a specimen dispensed into the reaction vessels 6. For example, as the stirrer 21 can be used the one that stirs the liquid specimen in a contactless manner using a surface acoustic wave device or the one that stirs the liquid specimen using a stir bar.

The photometer 22 is located between the stirrer 21 and the cleaner 23 as shown in FIG. 1, and emits analysis light for analyzing a reaction solution resulting from the reaction between the reagent and the specimen in the reaction vessels 6. The photometer 22 outputs, to the control unit 25, an optical signal corresponding to the amount of analysis light having transmitted through the reaction solution in the reaction vessels 6.

As shown in FIG. 1, the cleaner 23 is located on the circumference of the reaction table 5 near the specimen dispensing apparatus 10. The cleaner 23 sucks the reaction solution from the reaction vessels 6 through a nozzle to discharge it. Thereafter, the cleaner 23 injects a cleaning fluid such as detergent into the reaction vessels 6 through the nozzle and sucks it out. By repeating this operation several times, the cleaner 23 cleans inside the reaction vessels 6 after the completion of photometry by the photometer 22.

The control unit 25 can be, for example, a microcomputer, and is connected to each constituent element of the automatic analyzer 1 as shown in FIG. 1. The control unit 25 controls the operation of each constituent element as well as analyzing, for example, the constituent concentration of a specimen from the absorbance of the reaction solution based on the optical signal received from the photometer 22. In addition, according to an analysis instruction received through an input unit 26, the control unit 25 implements analysis while controlling the operation of each constituent element of the automatic analyzer 1. According to a display instruction received through the input unit 26, the control unit 25 displays on a display unit 27 such as a display panel various types of information including an analysis result and an alarm message. Further, the control unit 25 compares the pressure signal received from the pressure sensor 18b of the agent applicator 18 with a threshold signal relative to a predetermined pressure threshold. Based on the comparison, the control unit 25 determines whether the agent such as a fluoropolymer solution or a silicone resin solution has been applied appropriately to the discharge end portion 11b of the dispensing nozzle 11.

The automatic analyzer 1 configured as above operates under the control of the control unit 25. Thus, the specimen dispensing apparatus 10 sequentially dispenses specimens from the specimen vessels 9b held by the racks 9a into the reaction vessels 6 transported along the circumferential direction of the rotating reaction table 5. Into the reaction vessels 6 having a specimen dispensed therein, the first reagent dispensing apparatus 7 and the second reagent dispensing apparatus 8 sequentially dispense reagents from the reagent vessels 2a and 3a, respectively.

Each time the reaction table 5 stops rotating, the stirrer 21 stirs the reagent and the specimen dispensed into the reaction vessels 6. As a result, the reagent and the specimen react with each other. When the reaction table 5 restarts rotating, the reaction vessels 6 pass through the photometer 22. The photometer 22 performs photometry on the reaction solution resulting from the reaction between the reagent and the specimen in the reaction vessels 6. The control unit 25 then analyzes the constituent concentration and the like. After the completion of photometry by the photometer 22, the reaction vessels 6 are sent to the cleaner 23 where they are cleaned to be used again for the analysis of a specimen.

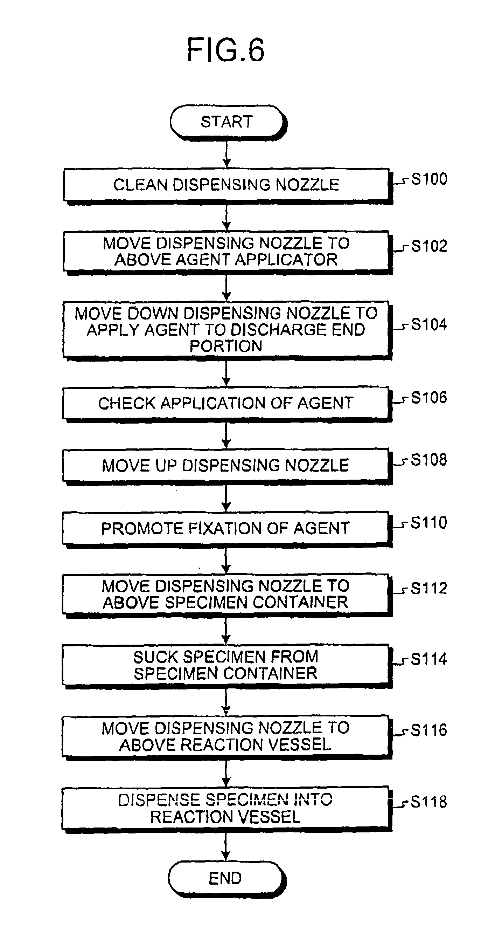

As described above, according to the embodiment, the specimen dispensing apparatus 10 includes the agent applicator 18 that applies an agent to the discharge end portion 11b of the dispensing nozzle 11. The agent is a solution, such as a fluoropolymer solution or a silicone resin solution, having a low affinity for a specimen to be dispensed than the inner surface of the cylindrical portion 11a of the dispensing nozzle 11. This allows the specimen dispensing apparatus 10 to apply the agent to the discharge end portion 11b of the dispensing nozzle 11 as required. For example, under the control of the control unit 25, the specimen dispensing apparatus 10 can apply the agent to the discharge end portion 11b of the dispensing nozzle 11 during the analysis of a specimen. A description is given below with reference to FIG. 6 of this operation of the specimen dispensing apparatus 10 under the control of the control unit 25 upon application of an agent to the discharge end portion 11b of the dispensing nozzle 11.

The control unit 25 first cleans the dispensing nozzle 11 (step S100). More specifically, the control unit 25 moves the dispensing nozzle 11 from where it has dispensed a specimen into each of the reaction vessels 6 on the reaction table 5 to the washing tank 10d for cleaning the dispensing nozzle 11. Thereafter, the control unit 25 rotates the dispensing nozzle 11 in the horizontal direction to move it from the washing tank 10d to just above the agent applicator 18 (step S102).

Subsequently, the control unit 25 moves down the dispensing nozzle 11 to apply an agent to the discharge end portion 11b (step S104). The pressure sensor 18b detects the pressure on the agent applicator 18 when the dispensing nozzle 11 moves down and the discharge end portion 11b is brought into contact with the agent applicator 18. The pressure sensor 18b outputs a pressure signal to the control unit 25 based on the detected pressure. Based on the pressure signal received from the pressure sensor 18b, the control unit 25 checks the application of the agent to the discharge end portion 11b (step S106).

More specifically, the control unit 25 compares the pressure signal received from the pressure sensor 18b of the agent applicator 18 with a threshold signal relative to a predetermined pressure threshold. Based on the comparison, the control unit 25 determines whether the agent has been applied appropriately to the discharge end portion 11b of the dispensing nozzle 11. Having determined that the agent has not been applied appropriately, the control unit 25 displays this information on the display unit 27 and also causes the specimen dispensing apparatus 10 to apply the agent again to the discharge end portion 11b.

Having determined that the agent has been applied appropriately, the control unit 25 moves up the dispensing nozzle 11 to its original position (step S108). Thereafter, the control unit 25 rotates the dispensing nozzle 11 in the horizontal direction to move it from the agent applicator 18 to just above the fixation promoting unit 19. The fixation promoting unit 19 promotes fixation of the agent (step S110). Thus, the agent applied to the discharge end portion 11b of the dispensing nozzle 11 is fixed as the non-affinity film 11d.

The control unit 25 then rotates the dispensing nozzle 11 in the horizontal direction to move it from the fixation promoting unit 19 to above one of the specimen vessels 9b held by one of the racks 9a (step S112). Subsequently, the control unit 25 moves down the dispensing nozzle 11 to suck a specimen from the specimen vessel 9b (step S114).

The control unit 25 moves up the dispensing nozzle 11, and rotates it in the horizontal direction to above one of the reaction vessels 6 (step S116). Subsequently, the control unit 25 moves down the dispensing nozzle 11 to dispense the specimen into the reaction vessel 6 (step S118).

As described above, to the discharge end portion 11b of the dispensing nozzle 11, the agent applicator 18 applies an agent having a low affinity for a specimen to be dispensed than the inner surface of the cylindrical portion 11a. Accordingly, even specimens of a wide range of viscosities can be dispensed without dropping. Moreover, specimens of a wide range of viscosities can be dispensed highly accurately with less variation in the dispensed amount of the specimens.

The dispensing performance of the specimen dispensing apparatus 10 was tested using different types of dispensing nozzles, i.e., the dispensing nozzle 11 of this embodiment (Example 1) and a comparative nozzle (Comparative Example 1). The dispensing nozzle 11 used in the test was made of stainless steel and the end thereof was coated with the non-affinity film 11d made of fluoropolymer. The comparative nozzle was basically similar to the dispensing nozzle 11 except having no coating of the non-affinity film 11d. Under the condition that the target amount of test specimens, one having a viscosity of 1 mPa·s and the other having a viscosity of 3 mPa·s, to be dispensed was set to 0.4 microliter, the amount (microliter) of the test specimens actually dispensed (discharged) was measured. The viscosities of the test specimens were determined based on the viscosity of human blood.

The test results are shown in Table 1 with dispensed amount difference (%) based on the actual dispensed amount of the test specimen having a viscosity of 1 mPa·s. In the test, the test specimens were dispensed 100 times through the respective nozzles, and the amount of each test specimen actually dispensed was measured each time by measuring the absorbance of a dye dispensed as the test specimen and then diluted. Table 1 shows as the actual dispensed amount the average of the amounts of each test specimen obtained by the 100 times of measurements. The dispensed amount difference (%) is on the basis of the average of the amounts of each test specimen actually dispensed, and is obtained as follows: (the dispensed amount difference/the actual dispensed amount of the test specimen having a viscosity of 1 mPa·s) x 100.

| Table 1 | | | | |
|---|---|---|---|---|
| Viscosity of Specimen (mPa·s) | Example 1 | | Example 1 | |
| | Actual Dispensed Amount (µL) | Dispensed Amount Difference (%) | Actual Dispensed Amount (µL) | Dispensed Amount Difference (%) |
| 1 | 0.569 | 6.7 | 0.609 | 12.5 |
| 3 | 0.531 | | 0.533 | |

As shown in Table 1, compared to the comparative nozzle, the specimen dispensing apparatus 10 can reduce the dispensed amount difference (%) to about a half with the dispensing nozzle 11. That is, according to the embodiment, with the dispensing nozzle 11 having the non-affinity film 11d coated on the discharge end portion 11b, the specimen dispensing apparatus 10 can dispense liquids of different viscosities with little variation in the amount of dispensed liquids. Thus, it is possible to dispense liquid specimens of a wide range of viscosities with high accuracy.

In the description given in connection with FIG. 6, an agent is applied to the discharge end portion 11b each time the dispensing nozzle 11 dispenses a specimen. However, the dispensing method of the present invention only requires the application of an agent having a low affinity for a liquid specimen to the discharge end portion of the dispensing nozzle after the cleaning process. Therefore, according to another embodiment of the present invention, the application of an agent can be once for several times of dispensing operations. Alternatively, after the dispensing nozzle 11 is cleaned with a cleaning fluid, an agent can be applied to the discharge end portion 11b during the warm-up period of the automatic analyzer 1 that has been turned on.

Examples of the agent having a low affinity for a specimen than the inner surface of the dispensing nozzle 11 include fluoropolymer solutions such as trade name: *FluoroSurf*-FG-3020TH-8.0 manufactured by Fluoro Technology Co. Ltd., and silicone resin solutions such as trade name: *HIREC*-1550 manufactured by NTT Advanced Technology Corporation and trade name: *Rain-X* manufactured by Shell Car Care International Ltd. when such an agents is applied to the discharge end portion 11b, the dispensing nozzle 11 can be used for the dispensing operation even if the agent is not fully dried and not fixed as the non-affinity film 11d since the agent has a low affinity for a specimen.

While the agent applicator 18 is described as a pad impregnated with an agent such as a fluoropolymer solution or a silicone resin solution, it can be a sheet 31 coated with an agent 31a made of fluoropolymer or silicone resin. In this case, the dispensing nozzle 11 moves down to bring the discharge end portion 11b into contact with the sheet 31 so that the agent 31a is applied to the discharge end portion 11b. After that, by drying the agent 31a at ordinary temperature or high temperature, a non-affinity film having a low affinity than the inner surface of the cylindrical portion 11a can be formed on the discharge end portion 11b. The sheet 31 extends around two rollers 32. Each time the agent 31a is applied to the discharge end portion 11b, one of the rollers 32 rolls up the sheet 31. Below the sheet 31 is arranged a pressure sensor 33 that detects the pressure on the sheet 31 from the discharge end portion 11b in contact therewith.

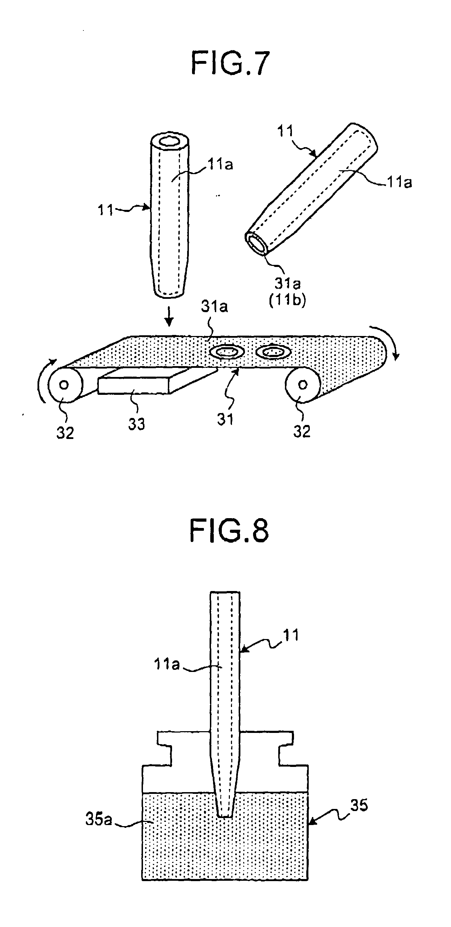

The agent applicator 18 can also be, as shown in FIG. 8, an agent vessel 35 that contains an agent 35a such as a fluoropolymer solution or a silicone resin solution. In this case, the agent vessel 35 is provided with a known fluid level sensor as a means for checking the application of the agent to the discharge end portion 11b of the dispensing nozzle 11. For example, a fluid level sensor disclosed in Japanese Patent No. 3064487 can be used which detects that the lower end of a dispensing nozzle comes in contact with an agent based on changes in capacitance.

In addition, the end portion of the dispensing nozzle 11 used in the specimen dispensing apparatus 10 is described as being tapered. However, the end portion of the dispensing nozzle is not necessarily tapered, but can be of a straight pipe.

Besides, the agent applicator 18 is provided to apply an agent to the dispensing nozzle 11 of the specimen dispensing apparatus 10 in the above embodiment. Similarly, an agent applicator can be provided to apply an agent to, for example, the dispensing nozzle 7b of the first reagent dispensing apparatus 7 and the dispensing nozzle 8b of the second reagent dispensing apparatus 8. In this case, the agent applicator is located between the reagent vessels 2a and the washing tank 7c for cleaning the dispensing nozzle 7b, and between the reagent vessels 3a and the washing tank 8c for cleaning the dispensing nozzle 8b.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A dispensing apparatus (10) comprising;
a dispensing nozzle (11) that moves between a first position and a second position, and sucks in a liquid specimen at the first position to dispense the liquid specimen into a vessel (6) located at the second position, the liquid specimen containing at least one of a specimen and a reagent; and
an agent applicator (18) that is located on a path of movement of the dispensing nozzle, and applies, to a discharge end portion of the dispensing nozzle, an agent having a low affinity for the liquid specimen than an inner surface of the dispensing nozzle,

2. The dispensing apparatus (10) according to claim 1, wherein
the agent applicator (18) is located between a washing tank (10d) and a specimen vessel (9b) that contains the specimen on the path of movement of the dispensing nozzle (11), and
after dispensing the liquid specimen, the dispensing nozzle is cleaned in the washing tank.

3. The dispensing apparatus (10) according to claim 1, wherein the agent applicator (18) is one selected from a group consisting of a member that is impregnated with the agent, a sheet that is coated with the agent, and an agent vessel that contains the agent.

4. The dispensing apparatus (10) according to claim 1, further comprising a fixation promoting unit (19) that is located on the path of movement of the dispensing nozzle, the fixation promoting unit promoting fixation of the agent applied to the discharge end portion of the dispensing nozzle.

5. The dispensing apparatus (10) according to claim 4, wherein the fixation promoting unit (19) blows air or hot air to the discharge end portion of the dispensing nozzle to dry the agent applied to the discharge end portion.

6. The dispensing apparatus according to claim 1, wherein the agent applicator (18) includes a check unit (18b) that checks application of the agent to the discharge end portion of the dispensing nozzle.

7. The dispensing apparatus (10) according to claim 6, wherein the check unit (18b) is any one of a pressure sensor that detects a pressure on the agent applicator applied by the dispensing nozzle in contact with the agent applicator, and a fluid level sensor that detects a fluid level in the agent vessel.

8. A dispensing method comprising:
sucking in a liquid specimen through a dispensing nozzle, the liquid specimen containing at least one of a specimen and a reagent;
discharging the liquid specimen;
cleaning the dispensing nozzle; and
applying, to a discharge end portion of the dispensing nozzle, an agent having a low affinity for the liquid specimen.

9. The dispensing method according to claim 8, further comprising, after the applying, promoting fixation of the agent applied to the discharge end portion of the dispensing nozzle.

10. The dispensing method according to claim 8 or 9, further comprising, after the applying, checking application of the agent to the discharge end portion of the dispensing nozzle.

11. An automatic analyzer that measures an optical characteristic of a reaction solution resulting from a reaction between a specimen and a reagent stirred together to analyze the reaction solution, the automatic analyzer comprising the dispensing apparatus according to any one of claims 1 to 7 to dispense at least one of the specimen and the reagent.
